# EUROPEAN PATENT SPECIFICATION

(11) **EP 0 607 405 B1**
(45) Date of publication and mention of the grant of the patent: **12.03.1997**
(21) Application number: 93917878.6
(22) Date of filing: 21.07.1993
(51) Int. Cl.: G06K 7/00, G06K 17/00, G07F 7/00

(54) **NON-CONTACTING TRANSACTION SYSTEM FOR TICKETING**
KONTAKTLOSES TRANSAKTIONSSYSTEM FÜR BONAUSGABE
SYSTEME DE TRANSACTION SANS CONTACT POUR L'EMISSION DE TICKETS

(30) Priority: 23.07.1992 GB 9215706
(43) Date of publication of application: 27.07.1994
(73) Proprietor: INTERNATIONAL TRANSACT SYSTEMS LIMITED, Livingston (GB)
(72) Inventor: TAIT, Robert Allen Reid, Bathgate, West Lothian EH48 3DU (GB); TAIT, Elizabeth Mary, Bathgate, West Lothian EH48 3DU (GB)
(74) Representative: Naismith, Robert Stewart
(86) International application number: GB9301526
(87) International publication number: WO9402909

(56) References cited:
- WO-A-86/03869
- US-A- 4 277 837
- US-A- 4 639 583
- US-A- 4 800 543

## Description

The present invention relates to apparatus for logging data of transactions and particularly, but not exclusively, the invention relates to apparatus for conducting cashless financial transactions.

It is now widely accepted that purchasing goods or services in the domestic sector is more efficiently carried out if the purchase transaction does not use cash. Cash is often perceived as, at best, cumbersome and, at worst, an unnecessary risk to personal safety, for example, from muggings and also financially, from theft. Current trends are to move towards a "cashless society" and the momentum of this trend is gaining in support nationally and internationally.

Credit cards fall short of meeting all requirements in cashless transactions. For example, as regards security, a credit card contains the owner's identity number imprinted on a magnetic strip on the back of the card, together with the owner's name embossed on the front of the card. A holograph of the owner's signature is written on the back of the card and is the only means of confirming the correct ownership of the card.

Nevertheless, the present type of credit card has severe limitations in providing the ideal solution for a cashless transaction. For such a transaction to commence, the credit card must physically come into contact with either a paper voucher on which the embossed details are transferred by carbon copy or the card must be physically passed through a swipe machine so that the magnetic strip is electro-magnetically read by a magnetic head. Both of these techniques require intimate physical contact of a machine with a credit card. The next step in the transaction is for the owner of the credit card to append his signature on the paper voucher. The vendor in the transaction compares, or should compare, the signature on the back of the card with that on the voucher. Assuming that there is a fair degree of resemblance between the signatures, the vendor then accepts that the transaction is complete. In order for the card owner's account to be debited, the vendor either sends copies of the carbon slips to the credit card company or the information from the magnetic swipe reader is electronically stored and usually transmitted over a telephone link. In the former case, one of the problems is loss of credit card slips or even damage to the slips such as to render details of the credit card unusable, with the result that the owner's account does not get debited and this results in a loss to the vendor. In the case of a card swipe machine, the information is periodically scanned from a central computer which polls all the swipe machines to which it is linked and the details of the transaction are then fed to a central storage location where the information is then entered into the user's account and a bill is then prepared and sent to the user.

One problem with the existing system is that card fraud is very easily perpetrated. This is mainly because the signature appears on the reverse side of the card. A signature can generally be perfected by repeated copying so that the end result appears similar to that on the card. The unauthorised user of the card can then forge the signature to complete a fraudulent transaction. Even if a stolen or lost card is reported, there is often considerable time before all premises and businesses accepting that type of card are notified. In the case of a swipe card, notification is carried out remotely and periodically over the telephone line. Nevertheless, a professional criminal is able to verify whether the card is still valid with minimal risk and to use the card on a day-to-day basis with minimal risk of being apprehended.

A further disadvantage of existing credit card systems is that it is not possible to use the card without physical contact. Therefore, it is not presently feasible to use a credit card for conducting a low valve transaction, such as purchasing a ticket for the parking of a car or admission to a sports function, admission to a metro or any other public transportation system, and in such situations, cash is still the preferred method of payment.

U.S. Patent No. 4,800,543 to Lyndon-James et al discloses a timepiece communication system which is intended to overcome problems associated with credit car/smart card transactions. This system consists of a wristwatch which contains a memory and a receiver and a transmitter. The memory stores the PIN of a single user. A reader includes a keypad and the reader also has a transmitter and a receiver. The reader transmits data to the wristwatch when placed in proximity thereto. The user enters a PIN number into the keypad and the reader transmits tis to the wristwatch which compares the transmitted number with the user-entered stored PIN number and if the numbers match, the transaction may proceed.

This system requires that each component has both a transmitter and a receiver to operate which is relatively expensive and also relatively complex in circuitry terms. Also, the user needs to actuate the keypad on the receiver to initiate the procedure; this is inconvenient or may be almost impossible in many transaction situations, such as car toll metering, parking etc.

An object of the present invention is to obviate or mitigate at least one of the aforementioned disadvantages.

According to one aspect of the present invention, there is provided a non-contacting transaction system comprising,
transmitter means having a memory for storage of data identifying the user therein, and a transmitter only for transmitting the stored data to a physically remote receiver upon actuation of the transmitter means by the user, and
physically separate receiver means for receiving only the transmitted data and also having indicator means for indicating that the data transmitted is received and that the transaction can proceed.

Preferably, the transmitter means includes a keypad for the user to insert details of a PIN number.

Conveniently, the non-contacting transaction system is a car-park ticketing system.

The transmitter includes a switch actuatable by the user which results in the stored data being continually transmitted or transmitted in bursts during the transmitting actuation.

Conveniently, the receiver may be coupled by a modem or the like over the telephone network to a central data processing and storage unit where details of the transactions are allocated to the user's account for subsequent billing.

Alternatively, the receiver may include disk storage means or other suitable mass storage means for storing validated transactions for subsequent despatching of the stored transaction data to the central data processing and storage unit at a later date.

Conveniently, the receiver includes a display for displaying to the vendee his PIN in the transmitted information. Advantageously, the receiver includes parity and code check means for rectifying the correctness of the received code prior to transmitting it to the modem.

According to another aspect of the invention, there is provided a transmitter for use in a non-contacting transaction system, said transmitter comprising a memory for storing data identifying the user, a transmitter coupled to the memory for wireless transmission only of said stored data to a receiver at remote location, and switch means actuatable by the user for causing said stored data to be transmitted, the transmitting having no receiver means for receiving wireless transmission.

Preferably, the transmitter includes a keypad for the user to insert details of a personal identification number (PIN), and said data being transmitted only if the correct PIN number is keyed in.

Preferably also, the transmitter includes a plurality of keys representative of different user accounts and the user can nominate which account a transaction is to be attributed to by selecting the appropriate key.

The transmitter is an infra-red transmitter.

Alternatively, the transmitter may include a remote telephone console interfaced to said memory and keys whereby a user may remotely conduct a transaction using radio frequency communications or any part of the electro-magnetic spectrum for communications.

According to a further aspect of the invention, there is provided a receiver for use in a non-contacting transaction system, said receiver comprising a data receiver for receiving a wireless transmission only, means for indicating that the data has been received, means for processing the received data for display, means for verifying the correctness of the data received, and display means for displaying to a vendor details of the user stored in said transmitter,the receiver have no transmitter means for transmitting wireless data.

Preferably, the receiver is a car-park ticketing machine.

Preferably, the receiver is coupled to the elements which combined comprise a card swipe machine. Conveniently, the receiver and/or card swipe machine are coupled to a cellular telephone network for receiving said data by radio frequency communication. Conveniently, the receiver may be coupled by a modem or the like over the telephone network to a central data processing and storage unit where details of the transactions are allocated to the user's account for subsequent billing.

Alternatively, the receiver may include disk storage means, or random access memory (RAM) or other suitable storage means for storing validated transactions for subsequent despatching of the stored transaction data to the central data processing and storage unit at a later date.

Thus, the invention provides a considerable improvement over existing cash cards to satisfy requirements for cashless transactions. The invention permits cashless transactions to be performed in a non-contacting fashion.

These and other aspects of the present invention will become apparent from the following description when taken in combination with the accompanying drawings in which:-
Fig. 1 is a diagrammatic view of a system consisting of a transmitter and a receiver shown coupled to a car-park ticketing machine in accordance with one aspect of the present invention;
Fig. 2 is a diagrammatic view of an alternative transmitter similar to that shown in Fig. 1 and which includes a keyboard and a set of credit card select buttons;
Fig. 3a and 3b are schematic block diagrams of the transmitter and receiver, respectively shown in Fig. 1;
Fig. 4 is a schematic block diagram of the transmitter shown in Fig. 2;
Fig 5 is a schematic block diagram of an alternative transmitter similar to that of Figs. 1 and 2, but which has no keypad;
Fig. 6 depicts a flow chart of the operation of the transmitter and receiver conducted by a user in the pursuit of purchasing a ticket using the transmitter and receiver shown in Fig. 1;
Fig. 7 and Fig. 8 depict flow charts which are similar to Fig. 6, but using the transmitters of Fig 2 and Fig. 3 respectively, and
Fig. 9 is a circuit diagram of an embodiment of an infra-red transmitter in accordance with the present invention.

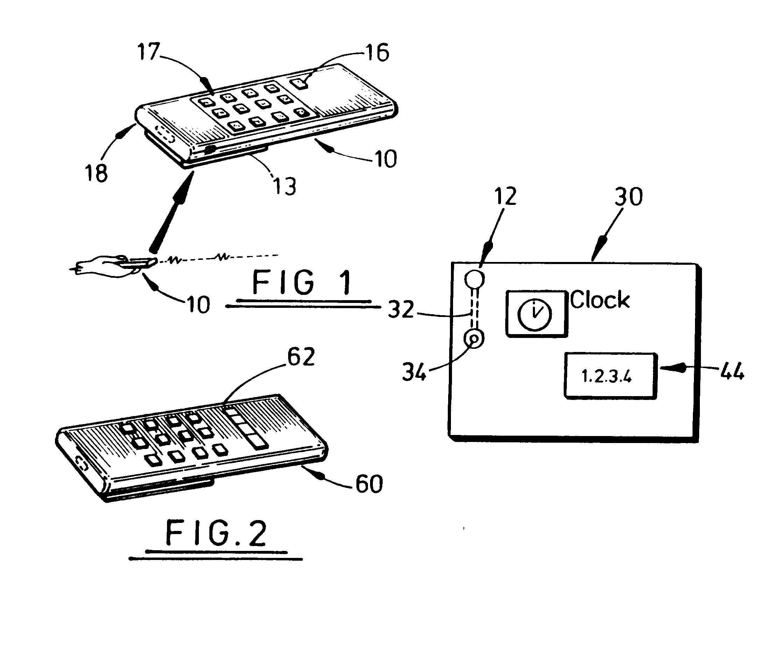

Reference is first made to Fig. 1 of the drawings which depicts a hand-held transmitter 10 and receiver 12 in accordance with the first embodiment of the invention. As will be later described in detail, the transmitter 10, when actuated, transmits information about the user which is received by the receiver 12 and used to initiate the transaction. The transmitter is about 10cm long and has a clip 13 for securing in a pocket or the like. The transmitter has a switch 16 and an infra-red filter 18 at one end of the transmitter. The transmitter also has a keypad 17 which enables high value transactions to be carried out by combining the stored credit card or account number with a personal identification number (PIN).

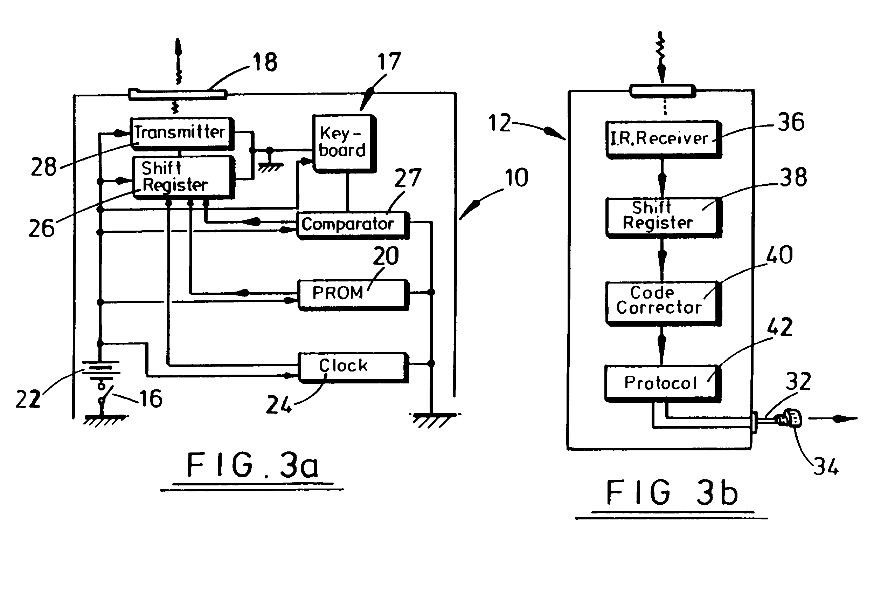

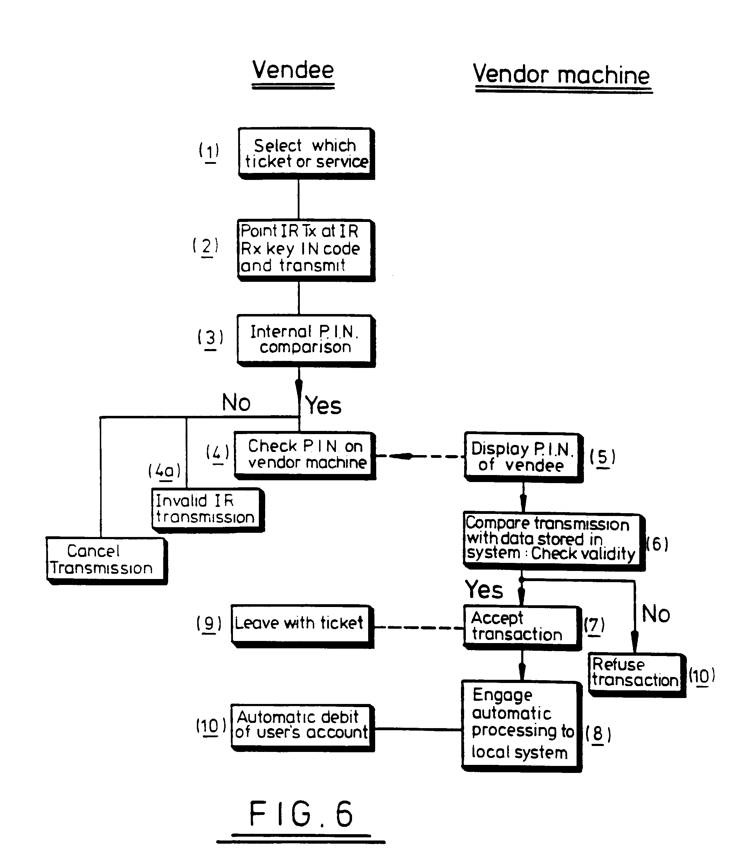

Reference is also made to Fig. 3a, 3b and Fig. 6 of the drawings which are a schematic block diagram of the transmitter and receiver circuits and a flow chart of the operations involved in a transaction using the transmitter/ receiver arrangement of Fig. 1. The transmitter 10 contains a programmable read only memory (PROM) chip 20 in which the owner's personal credit number (i.e. similar to a credit card number or bank number etc.) is electronically stored. The owner's name or other identifying number such as vehicle registration number or community charge number, is also stored. When the switch 16 is depressed, power is applied to the circuit from the battery 22 and the information contained in the PROM 20 is only transferred in parallel using the clock 24, to the shift register 26 only if the correct PIN number is inserted via the keypad 17. The keyed-in PIN number is compared in comparator 27 with the fused PIN number, and only if they match is the information transferred to shift register 26. The identity part of the fused data, for example, the vendee's name or community charge number or driving licence number, can be checked as previously mentioned. This further improves the security as the PIN number is known only to the user and will provide at least the same level of security as with a bank charge card for use with High Street terminals and the like. the information received in the shift register 26 is then transferred to the infra-red transmitter 28, in serial form, and clocked by the clock 24 for transmission. The infra-red filter 18 is a notch filter selected to best suit infra-red transmission.

Thus, in practice, the vendee or user can transfer his personal credit details in a non-contacting, remote fashion in the infra-red waveband. Of course, it will be appreciated that transmission might be in any suitable part of the electro-magnetic spectrum, not necessarily at infra-red wavelengths.

The transmitted data is received by the receiver 12 which is coupled to a conventional car-park ticketing machine 30 by an internal cable and connector 32,34 respectively. As best seen from the receiver schematic block diagram in Fig. 3b, the data is received by a suitable infra-red receiver 36 in serial form and the receiver then assembles the data into parallel format for the shift register 38. The parallel data is checked for parity in the code corrector 40 and any precoded format of data using a protocol circuit 42 prior to being transferred to the ticketing machine 30.

Thus, the information in the transmitter is passed from the transmitter to the receiver and then to the ticketing machine without contact or from suffering from the aforementioned disadvantages.

The operation of the system in a cashless transaction is best described with reference to the flow chart shown in Fig. 6 of the drawings. The receiver 12 on the ticketing machine has a display panel 44 which displays the contents of the identity part of the message, for example, the name of the user or vendee once the transmission is complete. This vendee can check that transmission has occurred and all validity checks made by reading the contents of display panel 44, as shown in step 4 of Fig. 6. Assuming that the vendee is the owner of the transmitter, only he knows the detail of the identity part of the message and knows the correct code to key in. If, in fact, the vendee is not the owner of the transmitter, then only access to sophisticated electronic equipment would be required to interrogate the transmitter to enable misuse of the transmitter. Although this is, in theory, possible it is most unlikely that this facility would be available to criminals to carry out widespread fraud and the security achieved is far superior to that of comparing signatures.

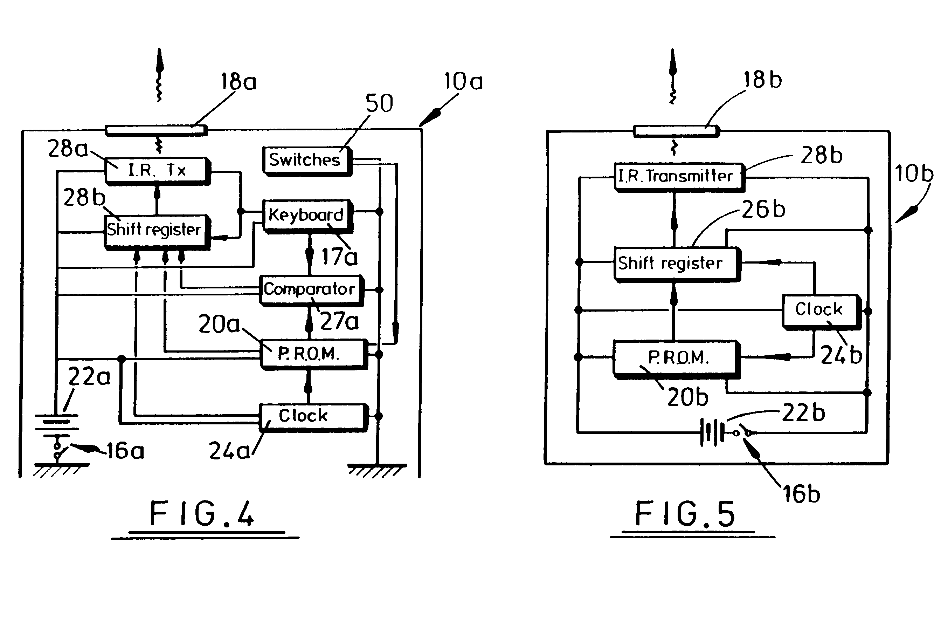

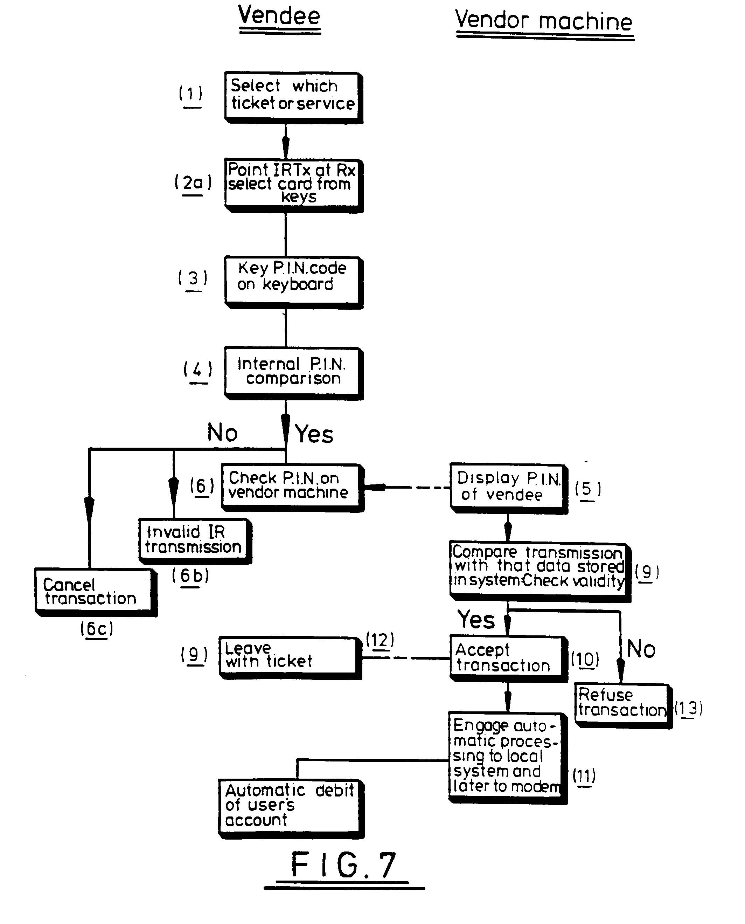

Reference is now made to Figs, 2, 4 and 7 of the accompanying drawings which describe a further embodiment of the invention. The transmitter 10a shown in Fig. 2 is similar to that shown in Fig. 1 in which like numerals denote like parts, but with the suffix 'a' added and which includes a facility for using the transmitter 10a with more than one credit card. This is achieved by providing a set of card select buttons 50, each of which can be selected by the user (step 2a, Fig. 7) in order to designate a particular transaction to a particular credit card. In this case, the individual owns several credit cards and wishes to have one transmitter to operate on behalf of all of the credit cards. Each card select button allows the operator to select the credit card which he wishes to use to complete the transaction. As shown in Fig. 4, the switches 50 are coupled to the PROM 20a and to the other components which contain the details appropriate to the card selected. Once the particular button has been depressed, the operation of the device is identical to that described with reference to Fig. 1.

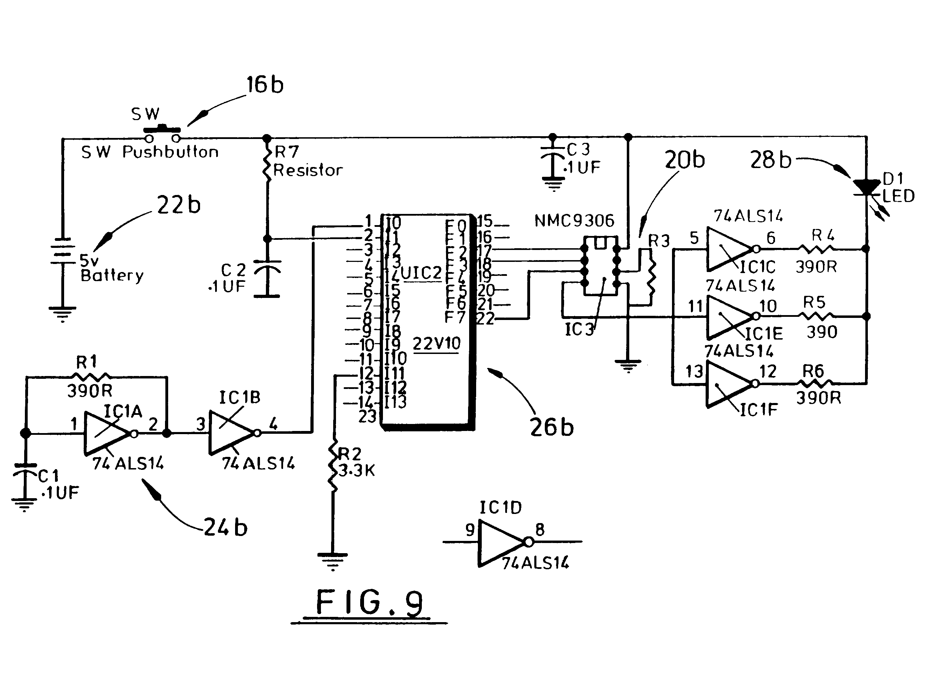

The device can be used for low value transactions such as paying parking charges, ticketing for metros and the like and as security codes are regularly updated any loss and unauthorised use is likely to be insignificant. Moreover, the transaction is likely to be fully mechanised for the vendor. Reference is now made to Fig. 5 of the accompanying drawings which are for a transmitter of generally similar size and shape to the transmitter 10 shown in Fig. 1 except that it does not have a key-pad. The circuit elements in Fig. 5 are referred to by like numerals, but by suffix 'b' added and operate in the same way. From Fig. 5 it will be seen that the basic operation is similar to the transmitter of Fig. 1 except that a PIN number is not employed. Moreover, the transmitted word would be a unique number and correlated to the user's identity by the software contained in the receiving apparatus. An example of how this circuit might be implemented is shown in Fig. 9. It comprises electronic elements where each and every one form part of the industry standard. ICs 1A and B might be a 74ALS14 or any suitable package containing 6 Schmitt trigger invertors; IC 2 is a 22V10 or any similar Programmable Array Logic configured to drive IC 3, an NMC9306, a 512-bit programmable serial read only memory. The resistors and capacitors are 1/4 watt, 5 percent tolerance components; a nominal 6 volt battery is employed. The light emitting diode D1 is similar to those used in television channel changers. The user's credit card number and the encryption element are fused in IC 3. These data are configured in an auto-clocking code, a 3 from 9 code being an example, ready for transmission. Implementation might also employ micro-processors/micro-controllers to reduce the component count within the transmitter. There are many such devices available, an example being COP8720C, or a COP424C with an accompanying NMC9306.

The receiver might be configured round a bar-code reader. One example is the Hewlett-Packard HBCR8500 which contains all the necessary electronics to convert the data from the transmitter to ASC11, an international standard compatible with the majority of peripherals and swipe card machines.

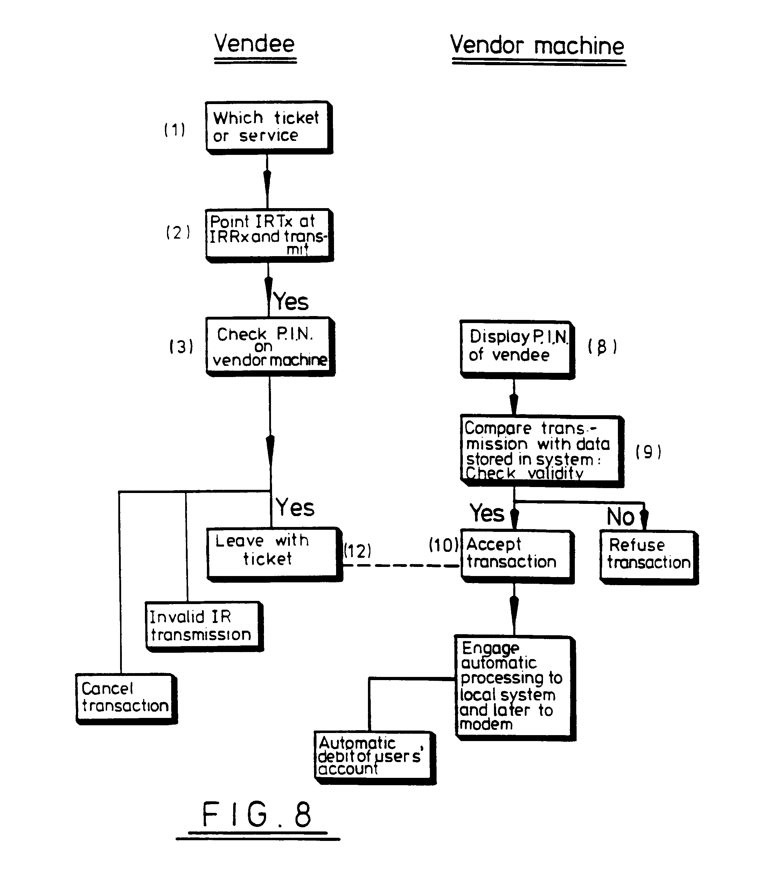

Reference is now made to Figs. 5 and 8 of the accompanying drawings which are for a transmitter generally similar in size and shape to the transmitter 10 shown in Fig. 1 except that it does not have a keypad.

The circuit elements in Fig. 5 are referred to by like numerals,but with the suffix 'b' added and operate in the same way. From Figs. 5 and 8 it will be seen that the basic operation is similar to the transmitter of Fig. 1 except that a PIN number is not entered, that is, step 3 is omitted. This device can be used for low value transactions such as paying parking charges, paying tolls and the like and as the security codes are regularly updated any loss and unauthorised use is likely to be insignificant.

It will be appreciated that various modifications may be made to the embodiments hereinbefore described without departing from the scope of the invention. For example, two chips may be combined in a transmitter; one chip containing the user's credit information, PIN number and the like, and a second chip containing an encryption algorithm so that the data transmitted is encrypted for more secure communications. Each receiver would have a corresponding chip with a decryption algorithm so that the transmitted information can be decoded and validation completed by the local system. The size and shape of the transmitter may be varied and, in fact, depending on manufacturing technology, the transmitter may be credit card shaped to fit in a wallet or the like. The transmitter on such a credit card shape could also contain a keycard and credit card selector keys. The device and system could be used other than for financial transactions; it could be used to control entry or access to secure areas and the like, with the user's code (PIN) being verified at a local or central location.

The communication medium could be radio frequency (r.f.) sound or ultrasound suitable for carrying the necessary information to initiate a transaction, although it is believed that infra-red is the most suitable. A further modification is the addition of r.f. circuits to the transmitter and receiver so that the user is able to complete transactions remotely, in a similar manner to the operation of cardless cellular telephones. Thus, cinema theatre tickets and the like, could be ordered using the transmitter, and shopping could be done remotely with the receiver processing the order and automatically debiting the user's account.

The principal advantage of the invention is that it improves the security of cashless transactions and allows the transactions to be completed in a non-contacting fashion. Furthermore, it provides a more secure method of checking identity of the user without requiring signatures. In addition, a single transmitter can be used to complete transactions for various cards and the transactions can be performed for purchasing any type of goods or service, parking tickets, paying tolls and the like which is not hitherto been possible with existing credit cards.

## Claims

1. A non-contacting transaction system comprising,
transmitter means (10) having a memory (20) for storage of data identifying the user therein, and a transmitter (28) only for transmitting the stored data to a physically remote receiver (12) upon actuation of the transmitter means (10) by the user, and
physically separate receiver means (12) for receiving only the transmitted data and also having indicator means (44) for indicating that the data transmitted is received and that the transaction can proceed.

2. A system as claimed in claim 1 wherein the transmitter means (10) includes a keypad (17) for the user to insert details of a PIN number.

3. A system as claimed in claim 1 or claim 2 wherein the non-contacting transaction system is a car-park ticketing system (30).

4. A system as claimed in any preceding claim wherein the transmitter (10) includes a switch (16) actuatable by the user which results in the stored data being continually transmitted or transmitted in bursts during the transmitting actuation.

5. A system as claimed in any preceding claim wherein the receiver (12) is coupled to a modem or the like over the telephone network to a central data processing and storage unit where details of the transactions are allocated to the user's account for subsequent billing.

6. A system as claimed in any one of claims 1 to 4 wherein the receiver (12) includes disk storage means or other suitable mass storage means for storing validated transactions for subsequent despatching of the stored transaction data to the central data processing and storage unit at a later date.

7. A system as claimed in any preceding claim wherein said receiver means (12) includes a display (44) for displaying to the vendee his PIN in the transmitted information.

8. A system as claimed in any preceding claim wherein said the receiver means (12) includes parity and code check means (40,42) for rectifying the correctness of the received code prior to passing it to the modem.

9. A transmitter for use in a non-contacting transaction system, said transmitter (10) comprising a memory (20) for storing data identifying the user, a transmitter (28) coupled to the memory for wireless transmission only of said stored data to a receiver (12) at a remote location, and switch means (16) actuatable by the user for causing said stored data to be transmitted, the transmitter (10) having no receiver means for receiving wireless transmissions.

10. A transmitter as claimed in claim 9 wherein the transmitter includes a keypad (17) for the user to insert details of a personal identification number (PIN), and said data being transmitted only if the correct PIN number is keyed in.

11. A transmitter as claimed in claim 10 wherein the transmitter includes a plurality of keys (50) representative of different user accounts and the user can nominate which account a transaction is to be attributed to by selecting the appropriate key.

12. A transmitter as claimed in claim 9, 10 or 11 wherein the transmitter is an infra-red transmitter (28).

13. A transmitter as claimed in claim 9, 10 or 11 wherein the transmitter includes a remote telephone console interfaced to said memory (20) and keys (17) to enable a user to remotely conduct a transaction using radio frequency communications or any part of the electro-magnetic spectrum for communications.

14. A receiver (10) for use in a non-contacting transaction system, said receiver comprising a data receiver (36) for receiving a wireless transmission only, means for indicating that the data has been received, means for processing (38) the received data for display, means for verifying (40,42) the correctness of the data received, and display means (44) for displaying to a vendor details of the user stored in said transmitter, the receiver having no transmitting means for transmitting wireless data.

15. A receiver as claimed in claim 14 wherein the receiver is a car-park ticketing machine (30).

16. A receiver as claimed in claim 14 or claim 15 wherein the non-contacting transaction system is coupled to the elements which combined comprise a magnetic card reader where the card is read by swiping it through the card reader.

17. A receiver as claimed in claim 16 wherein the magnetic card reader is coupled to a cellular telephone network for receiving said data by radio frequency communication.

18. A receiver as claimed in any preceding claim wherein the receiver is coupled by a modem or the like over the telephone network to a central data processing and storage unit where details of the transactions are allocated to the user's account for subsequent billing.

19. A receiver as claimed in one of claims 15 to 17 wherein the receiver includes disk storage means, or random access memory (RAM) or other suitable storage means for storing validated transactions for subsequent despatching of the stored transaction data to the central data processing and storage unit at a later date.

## Patentansprüche

1. Kontaktloses Transaktionssystem, das aufweist:
eine Sendeeinrichtung (10) mit einem Speicher (20) für die Speicherung der Daten, die den Benutzer identifizieren, und mit einem Sender (28) nur für das Senden der gespeicherten Daten zu einem körperlich entfernten Empfänger (12) bei Betätigung der Sendeeinrichtung (10) durch den Benutzer, und
einen körperlich entfernten Empfänger (12) nur für das Empfangen der gesendeten Daten, der ebenfalls eine Anzeigeeinrichtung (44) aufweist, die den Empfang der gesendeten Daten anzeigt, und daß die Transaktion weitergehen kann.

2. System nach Anspruch 1, bei dem die Sendeeinrichtung (10) eine Tastatur (17) umfaßt, damit der Benutzer die Details einer PIN-Nummer eingeben kann.

3. System nach Anspruch 1 oder Anspruch 2, bei dem das kontaktlose Transaktionssystem ein System (30) für die Autoparkscheinausgabe ist.

4. System nach einem der vorhergehenden Ansprüche, bei dem die Sendeeinrichtung (10) einen Schalter (16) umfaßt, der durch den Benutzer bedienbar ist, wodurch die gespeicherten Daten während des Sendebetriebes kontinuierlich oder stoßweise gesendet werden.

5. System nach einem der vorhergehenden Ansprüche, bei dem der Empfänger (12) mit einem Modem oder dergleichen über das Telefonnetz mit einer zentralen Datenverarbeitungs- und Speicheranlage gekoppelt ist, wo die Details der Transaktionen dem Konto des Benutzers für eine anschließende Rechnungslegung zugeordnet werden.

6. System nach einem der Ansprüche 1 bis 4, bei dem der Empfänger (12) umfaßt: einen Plattenspeicher oder einen anderen geeigneten Massenspeicher für das Speichern der bestätigten Transaktionen für das anschließende Versenden der gespeicherten Transaktionsdaten zur zentralen Datenverarbeitungs- und Speicheranlage zu einem späteren Zeitpunkt.

7. System nach einem der vorhergehenden Ansprüche, bei dem der Empfänger (12) eine Anzeige (44) umfaßt, um dem Käufer seine PIN-Nummer in der gesendeten Information anzuzeigen.

8. System nach einem der vorhergehenden Ansprüche, bei dem der Empfänger (12) eine Paritäts- und Kodeprüfeinrichtung (40, 42) für das Verbessern der Richtigkeit des empfangenen Kode vor dessen Weiterleiten zum Modem umfaßt.

9. Sendeeinrichtung für eine Verwendung beim kontaktlosen Transaktionssystem, wobei die Sendeeinrichtung (10) aufweist: einen Speicher (20) für das Speichern der Daten, die den Benutzer identifizieren, einen Sender (28), der mit dem Speicher nur für eine Funksendung der gespeicherten Daten zu einem Empfänger (12) an einem entfernten Ort gekoppelt ist, und einen Schalter (16), der vom Benutzer betätigt werden kann, um die Sendung der gespeicherten Daten zu bewirken, wobei die Sendeeinrichtung (10) keinen Empfänger für das Empfangen von Funksendungen besitzt.

10. Sendeeinrichtung nach Anspruch 9, bei der die Sendeeinrichtung eine Tastatur (17) umfaßt, damit der Benutzer die Details einer persönlichen Kennnummer (PIN) eingeben kann, und wobei die Daten nur gesendet werden, wenn die richtige PIN-Nummer eingetastet wird.

11. Sendeeinrichtung nach Anspruch 10, bei der die Sendeeinrichtung eine Vielzahl von Tasten (50) umfaßt, die für die verschiedenen Benutzerkonten repräsentativ sind, und wobei der Benutzer benennen kann, welchem Konto eine Transaktion zugeschrieben werden soll, indem er die geeignete Taste auswählt.

12. Sendeeinrichtung nach Anspruch 9, 10 oder 11, bei dem die Sendeeinrichtung ein Infrarotsender (28) ist.

13. Sendeeinrichtung nach Anspruch 9, 10 oder 11, bei dem die Sendeeinrichtung einen fernbetätigten Telefonsteuerschrank umfaßt, der mit dem Speicher (20) und den Tasten (17) gekoppelt ist, damit ein Benutzer eine Transaktion bei Benutzung von Hochfrequenzkommunikationen oder irgendeines Teils des elektromagnetischen Spektrums für Kommunikationen fernbetätigt durchführen kann.

14. Empfänger (12) für eine Verwendung in einem kontaktlosen Transaktionssystem, wobei der Empfänger aufweist: einen Datenempfänger (36) nur für das Empfangen einer Funksendung, eine Einrichtung für das Anzeigen des Datenempfanges, eine Einrichtung (38) für die Verarbeitung der empfangenen Daten für die Anzeige, eine Einrichtung (40, 42) für die Prüfung der Richtigkeit der empfangenen Daten, und eine Anzeigeeinrichtung (44), die an einem Verkaufsautomaten die Details des in der Sendeeinrichtung gespeicherten Benutzers anzeigt, wobei der Empfänger keine Sendeeinrichtung für die Funksendung von Daten besitzt.

15. Empfänger nach Anspruch 14, bei dem der Empfänger eine Maschine (30) für die Autoparkscheinausgabe ist.

16. Empfänger nach Anspruch 14 oder Anspruch 15, bei dem das kontaktlose Transaktionssystem mit den Elementen gekoppelt ist, die kombiniert einen Magnetkartenleser aufweisen, wo die Karte gelesen wird, indem sie durch den Kartenleser geschlagen wird.

17. Empfänger nach Anspruch 16, bei dem der Magnetkartenleser mit einem Telefonzellennetz für das Empfangen von Daten mittels der Hochfrequenzkommunikation gekoppelt ist.

18. Empfänger nach einem der vorhergehenden Ansprüche, bei dem der Empfänger durch ein Modem oder dergleichen über das Telefonnetz mit einer zentralen Datenverarbeitungs- und Speicheranlage gekoppelt ist, wo die Details der Transaktionen dem Konto des Benutzers für eine anschließende Rechnungslegung zugeordnet werden.

19. Empfänger nach einem der Ansprüche 15 bis 17, bei dem der Empfänger umfaßt: einen Plattenspeicher oder einen Direktzugriffspeicher (RAM) oder einen anderen geeigneten Speicher für das Speichern der bestätigten Transaktionen für das anschließende Versenden der gespeicherten Transaktionsdaten zur zentralen Datenverarbeitungs- und Speicheranlage zu einem späteren Zeitpunkt.

## Revendications

1. Système de transaction sans contact, comprenant:
un moyen émetteur (10) avec une mémoire (20) destinée à l'enregistrement des données d'identification de l'utilisateur, et un émetteur (28) destiné uniquement à transmettre les données enregistrées à un récepteur physiquement éloigné (12) lors de l'actionnement du moyen émetteur (10) par l'utilisateur, et
un moyen récepteur physiquement séparé (12) pour recevoir uniquement les données transmises, et comportant également un moyen indicateur (44) pour indiquer que les données transmises ont été reçues et que la transaction peut se poursuivre.

2. Système selon la revendication 1, dans lequel le moyen émetteur (10) englobe un clavier (17) permettant à l'utilisateur d'entrer les détails d'un numéro PIN.

3. Système selon les revendications 1 ou 2, dans lequel le système de transaction sans contact est un système d'émission de tickets pour un parking (30).

4. Système selon l'une quelconque des revendications précédentes, dans lequel l'émetteur (10) englobe un commutateur (16) pouvant être actionné par l'utilisateur, entraînant la transmission continue ou la transmission par paquets des données enregistrées au cours de l'actionnement de la transmission.

5. Système selon l'une quelconque des revendications précédentes, dans lequel le récepteur (12) est couplé par un modem ou par un dispositif similaire par l'intermédiaire du réseau téléphonique à une unité centrale de traitement et d'enregistrement des données, dans laquelle les détails des transactions sont affectés au compte de l'utilisateur en vue de la facturation ultérieure.

6. Système selon l'une quelconque des revendications 1 à 4, dans lequel le récepteur (12) englobe un moyen de mémoire à disque ou un autre moyen de mémoire de masse approprié, pour enregistrer les transactions validées en vue de l'expédition ultérieure des données de transaction enregistrées à une unité centrale de traitement et d'enregistrement des données à une date ultérieure.

7. Système selon l'une quelconque des revendications précédentes, dans lequel ledit moyen récepteur (12) englobe un affichage (44) pour afficher le PIN de l'acheteur dans les informations transmises.

8. Système selon l'une quelconque des revendications précédentes, dans lequel ledit moyen récepteur (12) englobe un moyen de contrôle de la parité et du code (40, 42) pour rectifier l'état correct du code reçu avant de le transférer au modem.

9. Émetteur destiné à être utilisé dans un système de transaction sans contact, ledit émetteur (10) comprenant une mémoire (20) pour enregistrer des données d'identification d'un utilisateur, un émetteur (28) couplé à la mémoire pour assurer uniquement la transmission radioélectrique desdites données enregistrées à destination d'un récepteur (12) agencé dans un emplacement éloigné, et un moyen de commutateur (16) pouvant être actionné par l'utilisateur pour entraîner la transmission desdites données, l'émetteur (10) ne comportant pas de moyen récepteur pour recevoir les transmissions radioélectriques.

10. Émetteur selon la revendication 9, l'émetteur englobant un clavier (17) permettant à l'utilisateur d'entrer les détails d'un numéro d'identification personnelle (PIN), lesdites données étant transmises uniquement en cas d'entrée du PIN correct.

11. Émetteur selon la revendication 10, l'émetteur englobant plusieurs touches (50) représentatives de différents comptes de l'utilisateur, l'utilisateur pouvant désigner le compte sur lequel la transaction devra être affectée par sélection de la touche appropriée.

12. Émetteur selon les revendications 9, 10 ou 11, l'émetteur étant un émetteur infrarouge (28).

13. Émetteur selon les revendications 9, 10 ou 11, l'émetteur englobant une console de téléphone à distance connectée à ladite mémoire (20), et des touches (17) permettant à un utilisateur de faire une transaction à distance par l'intermédiaire de communications haute fréquence ou d'une quelconque partie du spectre électromagnétique destiné aux communications.

14. Récepteur (10) destiné à être utilisé dans un système de transaction sans contact, ledit récepteur comprenant un récepteur de données (36), pour recevoir uniquement une transmission radioélectrique, un moyen pour indiquer que les données ont été reçues, un moyen pour traiter (38) les données reçues en vue de leur affichage, un moyen pour vérifier (40, 42) l'état correct des données reçues, et un moyen d'affichage (44) pour afficher au distributeur les détails de l'utilisateur enregistrés dans ledit émetteur, le récepteur ne comportant pas de moyen émetteur pour la transmission des données radioélectriques.

15. Récepteur selon la revendication 14, le récepteur étant un distributeur de tickets d'un parking (30).

16. Récepteur selon les revendications 14 ou 15, dans lequel le système de transaction sans contact est couplé aux éléments constituant ensemble un lecteur de carte magnétique, la carte étant lue par suite de son passage à travers le lecteur de carte.

17. Récepteur selon la revendication 16, dans lequel le lecteur de carte magnétique est couplé à un réseau téléphonique cellulaire pour recevoir lesdites données par communication haute fréquence.

18. Récepteur selon l'une quelconque des revendications précédentes, le récepteur étant couplé par un modem ou un dispositif similaire par l'intermédiaire du réseau téléphonique à une unité centrale de traitement et d'enregistrement des données, dans laquelle les détails des transactions sont affectés au compte de l'utilisateur en vue de la facturation ultérieure.

19. Récepteur selon l'une quelconque des revendications 15 à 17, le récepteur englobant un moyen de mémoire à disque, une mémoire à accès sélectif (RAM) ou un autre moyen de mémoire approprié pour enregistrer les transactions validées en vue de l'expédition ultérieure des données de transaction enregistrées à l'unité centrale de traitement et d'enregistrement des données à une date ultérieure.
